# FASCICULE DE BREVET EUROPEEN

(11) **EP 2 726 272 B1**
(45) Date de publication et mention de la délivrance du brevet: **29.04.2015**
(21) Numéro de dépôt: 12730983.9
(22) Date de dépôt: 02.07.2012
(51) Int. Cl.: B29C 70/34, B29D 99/00, B29C 65/00, B29C 65/02, B64C 1/12, B29L 31/30

(54) **PROCÉDÉ DE RENFORCEMENT LOCAL D'UN PANNEAU COMPOSITE À RENFORT FIBREUX ET PANNEAU OBTENU PAR UN TEL PROCÉDÉ**
VERFAHREN ZUR LOKALEN VERSTÄRKUNG EINER VERBUNDPLATTE MIT FASERVERSTÄRKUNG UND IN DIESEM VERFAHREN GEWONNENE PLATTE
METHOD FOR LOCALLY STRENGTHENING A COMPOSITE PANEL WITH FIBROUS REINFORCEMENT AND PANEL OBTAINED USING SUCH A METHOD

(30) Priorité: 01.07.2011 FR 1155981
(43) Date de publication de la demande: 07.05.2014
(73) Titulaire: Daher Aerospace, 41400 Saint Julien De Chedon (FR)
(72) Inventeur: HUGON, Michael, F-44118 La Chevroliere (FR); PELARD, Alexandre, F-37400 Amboise (FR); SOUBELET, Dominique, F-37530 Nazelles (FR)
(74) Mandataire: Hamann, Jean-Christophe
(86) Numéro de dépôt international: PCT/EP2012/062861
(87) Numéro de publication internationale: WO 2013/004671

(56) Documents cités:
- WO-A1-01/58680
- WO-A1-2010/143212
- WO-A2-2008/139077
- US-A- 5 242 523

## Description

L'invention concerne un procédé de renforcement local d'un panneau composite à renfort fibreux et un panneau obtenu par un tel procédé. Elle trouve son application principalement, mais non exclusivement, dans l'industrie aéronautique pour la réalisation de panneaux de structure présentant des zones nécessitant un tel renfort local, que ce soit pour des besoins accrus en résistance mécanique ou en rigidité.

L'optimisation des structures travaillantes, nécessite d'adapter la section locale desdites structures à l'intensité du flux d'efforts qui les traverse. Ainsi, dans le cas d'une structure métallique, constituant notamment un panneau de fuselage, une nervure ou un longeron dans la structure d'un aéronef, de telles adaptations sont obtenues par enlèvement de matière, de sorte à y ménager des zones plus épaisses et plus rigides aptes à transmettre des flux d'efforts plus élevés dans les zones où une rigidité et/ou une résistance mécanique plus élevées sont demandées. Au niveau des variations de section, il se crée des concentrations de contraintes, dites géométriques, liées à la discontinuité de rigidité entre les zones les plus épaisses et les zones les plus fines. Ces discontinuités géométriques sont par conséquent des sites privilégiés pour l'initiation de fissures de fatigue. Ce phénomène est pris en compte par un coefficient de concentration de contrainte, ou *Kt,* lequel coefficient est d'autant plus élevé que la variation de section est effectuée sur une courte distance.

Dans le cas où ce même type de pièce est constitué d'un matériau composite stratifié à renfort fibreux, ladite pièce est obtenue, non pas par enlèvement de matière, mais par la superposition de couches fibreuses successives, ou plis. Si le renforcement local d'une telle pièce par l'augmentation de son épaisseur reste souhaitable, celui-ci est réalisé par l'adjonction locale de plis ou « *patch* » s'étendant sur la zone à renforcer. De la même manière que pour les pièces métalliques, la différence de rigidité entre la section courante et la section renforcée conduit à des concentrations de contraintes géométriques au niveau de la variation de section. Les matériaux composites n'ayant que peu de mécanismes aptes à accommoder la propagation d'une fissure, ces coefficients peuvent même, à géométrie équivalente, prendre des valeurs sensiblement plus élevées que pour les matériaux métalliques. Mais de plus, dans le cas d'un patch constitué d'un empilage de plis, il existe un mode de dégradation critique, où la surépaisseur correspondant audit patch est simplement cisaillée à l'interface du patch avec le reste de la pièce. Ce phénomène, également dénommé « pelage » est d'autant plus probable que ladite interface comporte des défauts tels que des porosités, où plus généralement des défauts de cohésion. Aussi, afin de contrer ces effets indésirables, les patchs sont réalisés par des lâchers de plis très progressifs qui conduisent à des pentes de raccordement entre la surface de la pièce et la surépaisseur. Ces pentes sont couramment comprises entre 0,02 et 0,05. Ainsi, une variation d'épaisseur de 1 mm s'effectue sur une distance comprise entre 20 mm et 50 mm de sorte que le patch s'étend sur une large surface et que le renforcement n'est pas très localisé géométriquement parlant. De plus, lesdits patchs sont fréquemment recouverts d'un pli s'étendant entre la peau et le sommet dudit patch. Alternativement, si des pentes plus élevées sont nécessaires, il est connu de l'art antérieur d'ajouter des éléments de fixation de type rivets, traversant le patch et la peau. Le document FR-A-2933067 décrit ainsi différentes solutions de renfort localisé d'un panneau constitué d'un matériau composite stratifié. Ces solutions de l'art antérieur, compatibles avec la réalisation des panneaux par drapage, sont pénalisantes en termes de masse. Bien que ces solutions de l'art antérieur aient été développées initialement pour les matériaux composites à matrice thermodurcissable, ces mêmes sont solutions sont reproduites pour les matériaux composites à matrice thermoplastique, les phénomènes explicités ci-avant étant principalement attribuables à la nature stratifiée du matériau.

Le document WO 01 58680 décrit, selon le préambule de la revendication 1, un panneau structural comprenant des patchs de renfort, et son procédé de fabrication, tant le panneau que le patch étant constitués d'un composite à renfort fibreux dans une résine thermodurcissable.

L'invention vise à résoudre les inconvénients de l'art antérieur et propose à cette fin un panneau structural composite stratifié à renfort fibreux selon la revendication 1.

Ainsi, de manière surprenante, un tel patch, outre la concentration géométrique de contraintes, inévitable, n'est pas, ou peu sensible au mode critique d'endommagement par pelage, et le chargement de l'ensemble des plis peut être obtenu avec des pentes de raccordement nettement plus élevées que ce qu'il est possible d'obtenir sur des patchs mettant en oeuvre des stratifiés fibreux à matrice thermodurcissable. Sans être lié par une quelconque théorie, il est supposé que la constitution thermoplastique de la matrice permet, d'une part, d'obtenir une liaison du patch par soudure laquelle liaison présente beaucoup moins de risque de présence de défauts de cohésion et que d'autre part, l'absence de réticulation autorisant des déformations à rupture nettement plus importantes pour les thermoplastiques que pour les thermodurcissables ainsi qu'une tenue en fatigue élevée de ces polymères permettent d'expliquer au moins partiellement ce résultat.

Dans tout le texte présent, le terme « panneau » désigne une structure coque plane ou en forme dont l'épaisseur est inférieure à 1/1000 ème de la plus petite de ses dimensions surfaciques. Un renfort localisé ou patch s'étend sur une surface inférieure ou égale au quart de la surface dudit panneau.

L'invention concerne également un procédé pour la réalisation d'un tel panneau selon la revendication 4.

Selon le mode de réalisation la peau est ainsi mise en contact à l'état non consolidé avec les patchs, voire, peut être drapée sur un outillage dans lequel un ou plusieurs patchs sont déjà placés, ou, alternativement, la peau peut être pré-consolidée préalablement à son assemblage avec les patchs. Quel que soit le mode de réalisation, le procédé objet de l'invention permet d'obtenir une correspondance géométrique parfaite entre le patch et la peau même lorsque la dite peau est de forme complexe.

L'invention peut être mise en oeuvre selon les modes de réalisation avantageux, exposés ci-après, lesquels peuvent être considérés individuellement ou selon toute combinaison techniquement opérante.

Selon un mode réalisation, plus particulièrement adapté aux applications aéronautiques, le polymère constituant la matrice de la peau et le polymère constituant la matrice du patch sont choisis parmi un ensemble comprenant le polyétheréthercétone (PEEK), les polysulfures de phénylène (PPS), le polyéthercétonecétone (PEKK) et le polyétherimyde (PEI). Ces matériaux, compatibles avec la mise en oeuvre du procédé objet de l'invention, présentent des caractéristiques mécaniques, notamment de tenue aux impacts, et des capacités de résistance au feu et aux fumées compatibles avec les applications aéronautiques.

Selon un mode de réalisation avantageux, le panneau objet de l'invention comprend des patchs sur les deux faces opposées de la peau. Lesdits patchs étant rapportés sur la peau et non drapés avec celle-ci le panneau présentant cette caractéristique peut être co-consolidé avec lesdits patchs en une seule opération et peut donc être réalisé selon un procédé particulièrement productif.

Avantageusement, le procédé objet de l'invention comprend après l'étape d) une étape consistant à :
g. tirer au vide l'ensemble patch et peau

Ce tirage au vide permet d'assurer à la fois la cohésion de l'ensemble lors du cycle de co-consolidation mais aussi d'appliquer la pression nécessaire à la conformation conjointe du patch et de la peau.

Selon un mode de réalisation particulier, le procédé objet de l'invention comprend entre les étapes c) et d) une étape consistant à :
h consolider la peau.

Ce procédé de mise en oeuvre est particulièrement économique et souple puisqu'il permet, selon un premier mode de réalisation, de constituer indépendamment les patchs et les peaux et de les assembler à la demande. Ces deux éléments peuvent avantageusement être réalisés à partir de plaques pré-consolidées, faciles à manipuler et sans date de péremption, de sorte qu'il est possible d'intégrer facilement ce procédé dans un processus de production tirée ou en « juste à temps ». La co-consolidation finale assure une très forte cohésion du patch et de la peau.

Avantageusement, le procédé objet de l'invention comprend entre les étapes e) et f) une étape consistant à :
i. conformer conjointement les formes du patch et de la peau.

Cette étape est applicable préférentiellement lorsque la peau est mise en contact avec le patch alors qu'elle se trouve à l'état consolidé. Cette conformation conjointe, autorisée par la souplesse de la matrice du patch et de la peau portées à une température suffisante, permet une correspondance géométrique parfaite de la peau et du patch.
Avantageusement les modes de réalisation du procédé objet de l'invention peuvent être combinés pour obtenir un panneau comportant des patchs de renfort sur les deux faces opposées de la peau.

L'invention concerne également un outillage pour la mise en oeuvre du procédé objet de l'invention, caractérisé en ce qu'il comprend une tôle de conformation, ou « *caul plate* », apte à appliquer la pression sur le patch et sur la peau. Ladite caul plate permet à la fois d'appliquer uniformément la pression de conformation sur l'assemblage mais aussi de calibrer l'épaisseur de l'ensemble patch et peau et ainsi d'obtenir un compactage optimal, exempt de défaut, de l'ensemble, garant d'un transfert effectif des efforts entre les plis du panneau ainsi obtenu, lorsqu'il est soumis à ses sollicitations de service.

L'invention est exposée ci-après selon ses modes de réalisation préférés, nullement limitatifs, et en référence aux figures 1 à 5 dans lesquelles :
- la figure 1 représente une vue partielle de profil et en coupe selon un plan A-A défini figure 2, d'une peau stratifiée renforcée localement par un patch également stratifié selon un exemple de réalisation de l'invention ;
- la figure 2 montre une vue partielle de dessus d'un panneau constitué d'une peau et d'un patch de renfort détouré selon un exemple de réalisation de l'invention ;
- la figure 3, représente une vue partielle en coupe d'un outillage pour la mise en oeuvre d'un procédé selon un exemple de réalisation de l'invention et permettant d'assembler des patchs pré-consolidés avec une peau obtenue par drapage de plis pré-imprégnés sur lesdits patchs placés dans ledit outillage ;
- la figure 4 est un exemple en coupe d'un outillage selon un mode de réalisation de l'invention intégrant une tôle de conformation adaptée à être appliquée sur la surface d'un panneau comprenant des patchs de renfort ;
- et la figure 5 représente un synoptique d'un procédé de réalisation d'un panneau renforcé localement selon un mode de réalisation du procédé objet de l'invention.

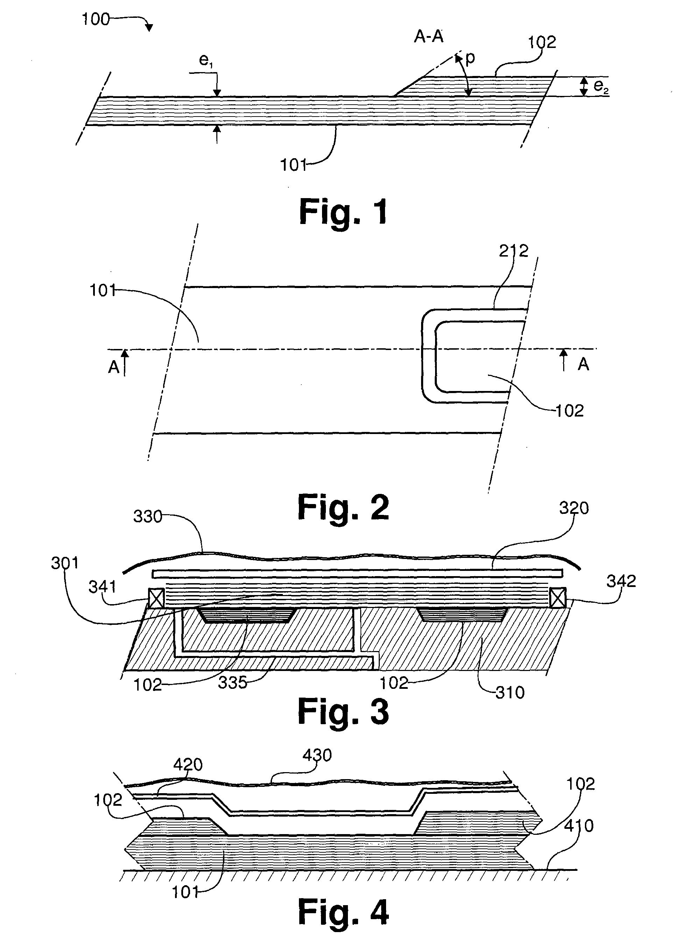

Figure 1, selon un exemple de réalisation d'un panneau (100) objet de l'invention, celui-ci comporte une peau stratifiée (101) d'épaisseur e₁, renforcée localement par un patch (102) également stratifié et d'épaisseur e₂. Selon le mode de réalisation,e₁≤e₂ ou e₂≤e₁. Par « stratifié » on entend que, tant la peau (101) que le patch (102), sont constitués d'un empilement de plis comprenant des fibres, préférentiellement mais non exclusivement, des fibres continues, s'étendant parallèlement aux faces de la peau, l'orientation desdites fibres étant définie au sein de chaque pli. À titre d'exemple non limitatif, lesdites fibres sont constituées de carbone, de verre ou d'aramide. La cohésion des plis est réalisée par une matrice constituée d'un polymère thermoplastique. Selon un de mode de réalisation particulier la matrice de la peau (101) et la matrice du patch (102) sont constituées du même polymère thermoplastique choisi dans un groupe comprenant le polyétheréthercétone, ou PEEK, le polysulfure de phénylène, ou PPS, le polyéthercétonecétone ou PEKK et le polyétherimyde ou PEI. Toutefois le procédé objet de l'invention peut être utilisé pour la réalisation de pièce composite constituée de matrices et de fibres moins performantes, notamment pour la réalisation d'aménagements intérieurs d'aéronef.

Le panneau (100) est ici représenté plan pour des raisons de commodité de représentation, toutefois l'invention s'applique *mutatis mutandis* à des panneaux présentant une courbure simple ou double, constante ou évolutive, dont le rayon de courbure, en ordre de grandeur, est supérieur à 500 fois l'épaisseur. Le panneau objet de l'invention peut également présenter des formes plus tourmentées, avec des bords tombés ou des cassures, à condition que ces accidents de surface se situent en dehors des zones renforcées par le patch (102). La liaison géométrique entre la face de la peau (101) et le sommet du patch (102) est réalisée par une pente p dont la valeur est typiquement comprise entre 0,5 et 1.

Figure 2, le contour (212) du patch (202) est réalisé par détourage dudit patch à l'état consolidé, avant que celui-ci ne soit rapporté par soudure ou co-consolidation sur la peau. Ainsi des contours complexes peuvent facilement être obtenus, tout en respectant la pente p. Ce détourage est réalisé par tout moyen connu de l'homme du métier, notamment par jet d'eau abrasif haute pression ou par outil coupant.

Dans l'ensemble du texte la co-consolidation doit être comprise comme un mode particulier de soudure, où l'ensemble de la matrice constituant la peau et l'ensemble de la matrice constituant le patch sont portés à une température supérieure ou égale à leurs températures de fusion respectives, puis refroidies conjointement. Ce mode d'assemblage constitue un mode préféré de réalisation de l'invention, mais ce mode d'assemblage n'est pas limitatif et le patch et la peau peuvent être assemblés par d'autre type de soudure ne mettant en oeuvre que la fusion de la matrice du patch ou de la peau, laquelle fusion étant limitée à une épaisseur plus ou moins importante de part et d'autre de l'interface entre la peau et le patch. L'homme du métier comprendra que la cohésion du patch avec la peau sera d'autant plus élevée que cette épaisseur mise en fusion et par suite de soudure sera importante.

Figure 3, selon un exemple de procédé pour la réalisation d'un panneau (100) objet de l'invention, les patchs (102) consolidés sont placés dans des cavités d'un outillage (301). Un empilement (301) de plis pré-imprégnés est placé sur l'outillage (310) en contact avec les patchs (102). Une plaque de conformation (320) est placée sur cet empilement (301), et le volume compris entre l'outillage (310) et la tôle de confirmation (320) est rendu étanche aux gaz par un sac à vide (330). L'outillage (310) comprend un circuit (315) permettant de tirer au vide ce volume. Selon des variantes de réalisation l'ensemble peut être placé dans une étuve ou l'outillage peut disposer d'un système de chauffage autonome lequel peut être réalisé par la circulation d'un fluide, par des résistances électriques tout mode de chauffage connu de l'homme du métier. Ainsi, l'application d'une dépression par le circuit (315) de tirage au vide de l'outillage (310) produit le compactage de l'empilement (301) des plis par la tôle de conformation (320). Ladite tôle de conformation (320) vient en butée sur des cales (341, 342) de calibrage. L'ensemble est chauffé à une température au moins égale à la température de fusion du polymère constituant la matrice de la peau (101) et du patch (102) alors que le tirage au vide est maintenu. Appliquée par la pression atmosphérique sur les cales (341, 342) de calibrage, la tôle de conformation (320) maintien l'épaisseur de la peau à sa valeur théorique indépendamment du foisonnement dudit polymère porté à sa température de fusion. L'ensemble est refroidi sous pression, ladite pression étant maintenue, par le vide, au moins jusqu'à la solidification de l'ensemble. Ainsi les patchs sont parfaitement intégrés à la peau.

Figure 4, selon un autre exemple de mise en oeuvre du procédé objet de l'invention, la peau (101) est placée sur l'outillage (410) à l'état pré-consolidé, tout comme les patchs (102) placés, également à l'état pré-consolidé, directement sur la peau (101). Une tôle de conformation (420) reprenant le contour des patchs est placée sur l'ensemble, et, comme précédemment (figure 3), l'espace compris entre l'outillage (410) et la tôle de conformation (420) et étanché par un sac à vide (430). Comme précédemment, l'ensemble est porté à la température de fusion de la matrice de la peau (101) et des patchs (102), sous la pression de la tôle de conformation (420), pression exercée par le tirage au vide de l'espace compris entre l'outillage (410) et le sac vide (430). Ainsi, les patchs (102) sont intégrés à la peau.

L'homme du métier comprendra aisément que ces deux exemples de mise en oeuvre peuvent être combinés, notamment pour obtenir un panneau comportant des patchs sur chacune des faces opposées de la peau (101). La pression appliquée à l'ensemble patch et peau par la tôle de conformation (320, 420) permet également de conformer la géométrie de l'ensemble, cette géométrie étant conférée par la géométrie de l'outillage (310, 410) et la géométrie de la tôle de conformation (320, 420).

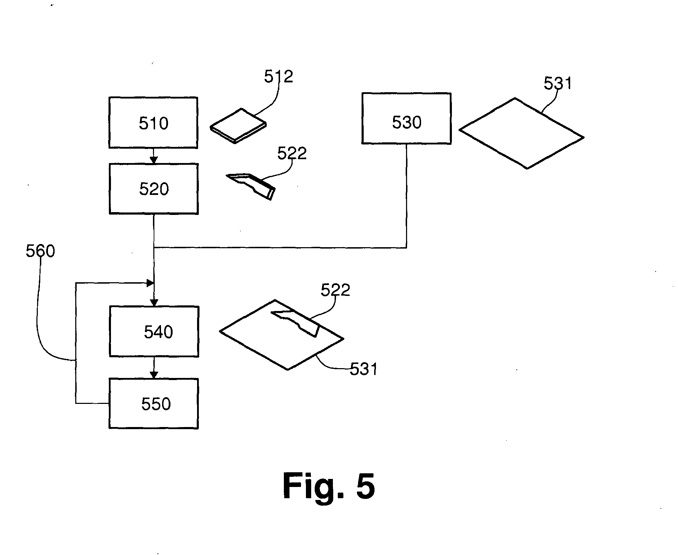

Figure 5, selon un exemple de réalisation, le procédé objet de l'invention comprend des étapes se déroulant de manière concurrente et pas nécessairement de manière séquentielle. Ainsi une première étape (510) consiste à obtenir ou à fabriquer une plaque (512) ou une série de plaques stratifiées consolidées comprenant des plis de renfort fibreux dans une matrice polymère thermoplastique. Ces plaques (512) consolidées, sont, au cours d'une étape de détourage (520), usinées par tout moyen connu de l'homme du métier de manière à leur conférer leur contour et à chanfreiner les bords de ce contour afin de former un patch (522). Parallèlement, une peau (531) est constituée dans une étape de drapage (530). Cette peau (531) est assemblée avec le patch (522) au cours d'une étape (540) de co-consolidation. Selon un premier mode de réalisation, l'étape (530) de drapage et de consolidation de la peau (531) est réalisée préalablement à l'étape (540) d'assemblage et de co-consolidation. La peau (531) est drapée sur le patch (522) consolidé, et l'ensemble est co-consolidé de sorte que lesdites étapes (530, 540) peuvent se dérouler de manière séquentielle ou simultanée. Optionnellement, une étape de parachèvement (550) consiste en la finition de l'ensemble, notamment au détourage de la peau (531). Selon un mode de réalisation particulier l'ensemble peau et patch ainsi parachevé peut subir un nouveau cycle (560) de co-consolidation avec un autre patch se sorte à, par exemple, créer un renfort sur l'autre face de la peau (531).

La description ci-avant et les exemples de réalisations montrent que l'invention atteint les objectifs visés, en particulier, la réalisation d'un panneau composite stratifié comprenant une ou plusieurs zones renforcées par des patchs, selon un procédé particulièrement productif

## Revendications

1. Panneau (100) structural composite stratifié à renfort fibreux comprenant :
a. une peau (101, 531) d'une épaisseur e₁, constituée d'un empilement de plis fibreux dans une matrice constituée d'un polymère ;
b. un renfort (102, 522) localisé, ou patch, lié à la surface de la dite peau (101, 531) et s'élevant d'une épaisseur e₂ selon une direction localement normale à la peau, constitué d'un empilement de plis fibreux dans une matrice constituée d'un polymère ;
c. dans lequel la surface des plis constituant ledit patch est dégressive depuis le pli du patch (102) en contact avec la peau (101), **caractérisé en ce que** le polymère constituant la matrice de la peau et le polymère constituant la matrice du renfort sont des polymères thermoplastiques et que les bords (212) dudit patch (102) sont inclinés d'une pente p supérieure à 0,5, la liaison du patch (102) avec la peau (101) consistant en une soudure.

2. Panneau selon la revendication 1, **caractérisé en ce que** le polymère constituant la matrice de la peau (101) et le polymère constituant la matrice du patch (102) sont choisis parmi un ensemble comprenant le polyétheréthercétone, les polysulfures de phénylène, le polyéthercétonecétone et le polyétherimyde.

3. Panneau selon la revendication 1, **caractérisé en ce qu'**il comprend des patchs (102) sur les deux faces opposées de la peau (101).

4. Procédé pour la réalisation d'un panneau selon la revendication 1, comprenant les étapes consistant à :
a. réaliser (510) une ébauche (512) de patch par drapage et consolidation d'un empilement de plis imprégnés d'un polymère thermoplastique ;
b. détourer (520) ladite ébauche (512) consolidé de sorte à réaliser le contour et une pente supérieure à 0,5 sur les bords du patch (522) ;
c. réaliser (530) une peau (531) par drapage de plis fibreux pré-imprégnés d'un polymère thermoplastique ;
d. placer le patch (522) en contact avec la peau (531) à l'emplacement visé
e. porter l'ensemble patch (522) et peau (531) à une température au moins égale à la température de fusion du polymère thermoplastique constituant la matrice du patch ou la matrice de la peau de sorte à fixer le patch à la peau ;
f. co-consolider (540) l'ensemble patch et peau.

5. Procédé selon la revendication 4, **caractérisé en ce qu'**il comprend après l'étape d) une étape consistant à :
g.tirer au vide l'ensemble patch et peau

6. Procédé selon la revendication 5, **caractérisé en ce qu'**il comprend entre les étapes c) et d) une étape consistant à :
h consolider la peau.

7. Procédé selon la revendication 6, **caractérisé en ce qu'**il comprend entre les étapes e) et f) une étape consistant à :
i. conformer conjointement les formes du patch et de la peau.

8. Procédé pour la réalisation d'un panneau selon la revendication 3, **caractérisé en ce qu'**il comprend les étapes consistant à :
a. réaliser une première ébauche consolidée en intégrant les patchs sur une première face de la peau par un procédé selon la revendication 4 ;
b. intégrer (560) les patchs sur la face opposée à la première face de la peau de la première ébauche par un procédé selon la revendication 7.

## Patentansprüche

1. Strukturelle Schichtverbundplatte (100) mit Faserverstärkung, die umfasst:
a. eine Haut (101, 531) mit einer Stärke von e₁, bestehend aus einer Schichtung von Faserfalten in einer aus einem Polymer bestehenden Matrize;
b. eine örtliche Verstärkung (102, 522), oder Patch, die mit der Oberfläche der Haut (101, 531) verbunden ist und sich mit einer Stärke von e₂ entlang einer örtlich normalen Richtung der Haut erstreckt und aus einer Schichtung von Faserfalten in einer aus einem Polymer bestehenden Matrize besteht;
c. in der die Oberfläche der den Patch bildenden Falten von der Falte des Patches (102) in Kontakt mit der Haut (101) ausgehend absteigend ist, **dadurch gekennzeichnet, dass** das die Matrize der Haut bildende Polymer und das die Matrize der Verstärkung bildende Polymer thermoplastische Polymere sind und die Ränder (212) des Patches (102) um eine über 0,5 liegende Neigung p abgeschrägt sind, wobei die Verbindung zwischen Patch (102) und Haut (101) aus einer Schweißnaht besteht.

2. Platte nach Anspruch 1, **dadurch gekennzeichnet, dass** das die Matrize der Haut (101) bildende Polymer und das die Matrize des Patches (102) bildende Polymer aus einer Gruppe ausgewählt werden, die Polyetheretherketon, Polyphenylensulfide, Polyetherketonketon und Polyetherimid umfasst.

3. Platte nach Anspruch 1, **dadurch gekennzeichnet, dass** sie auf den beiden gegenüberliegenden Seiten der Haut (101) Patche (102) umfasst.

4. Verfahren für die Herstellung einer Platte nach Anspruch 1, das folgende Schritte umfasst, welche bestehen aus:
a. Realisieren (510) eines Patch-Rohlings (512) durch Drappieren und Festigen einer Schichtung von mit einem thermoplastischen Polymer imprägnierten Falten;
b. den gefestigten Rohling (512) derart zuschneiden (520), dass an den Rändern des Patches (522) die Kontur und eine größere Neigung als 0,5 realisiert werden;
c. eine Haut (531) realisieren (530) durch Drappieren von mit einem thermoplastischen Polymer vor-imprägnierten Faserfalten;
d. den Patch (522) an der gewünschten Stelle mit der Haut (531) in Kontakt bringen
e. den Patch (522) und die Haut (531) zusammen derart auf eine Temperatur bringen, die mindestens so hoch ist wie der Schmelzpunkt des thermoplastischen Polymers, aus dem die Matrize des Patches oder die Matrize der Haut besteht, sodass der Patch an der Haut fixiert wird;
f. den Patch und die Haut zusammen verfestigen (540).

5. Verfahren nach Anspruch 4, **dadurch gekennzeichnet, dass** es nach dem Schritt d) einen Schritt umfasst, welcher besteht aus:
g. Vakuumziehen von Patch und Haut zusammen

6. Verfahren nach Anspruch 5, **dadurch gekennzeichnet, dass** es zwischen den Schritten c) und d) einen Schritt umfasst, welcher besteht aus:
h. die Haut verfestigen.

7. Verfahren nach Anspruch 6, **dadurch gekennzeichnet, dass** es zwischen den Schritten e) und f) einen Schritt umfasst, welcher besteht aus:
i. die Formen von Patch und der Haut zusammen miteinander anpassen.

8. Verfahren für die Herstellung einer Platte nach Anspruch 3, **dadurch gekennzeichnet, dass** es folgende Schritte umfasst, welche bestehen aus:
a. Realisieren eines ersten verfestigten Rohlings, indem die Patche auf einer ersten Seite der Haut durch ein Verfahren nach Anspruch 4 eingefügt werden,
b. Einfügen (560) der Patche auf der der ersten Seite der Haut des ersten Rohlings gegenüberliegenden Seite durch ein Verfahren nach Anspruch 7.

## Claims

1. A laminate composite structural panel (100) with fiber reinforcement comprising:
a. a skin (101, 531) with thickness e₁, made of a stack of fibrous plies in a matrix made of a polymer;
b. a local reinforcement (102, 522) or patch joined to the surface of said skin (101, 531) and rising to a thickness e₂ along a direction locally normal to the skin, made of a stack of fibrous plies in a matrix made of a polymer;
c. wherein the surface of the plies making up said patch reduces from the patch ply (102) in contact with the skin (101), **characterized in that** the polymer making up the matrix of the skin and the polymer making up the matrix of the reinforcement are thermoplastic polymers and the edges (212) of said patch (102) are inclined with a gradient p greater than 0.5, wherein the join between the patch (102) and the skin (101) is a weld.

2. A panel according to claim 1, **characterized in that** the polymer making up the matrix of the skin (101) and the polymer making up the matrix of the patch (102) are selected from a group comprising polyetheretherketone, polyphenylene sulfides, polyetherketoneketone and polyetherimide.

3. A panel according to claim 1, **characterized in that** it comprises patches (102) on the two opposite sides of the skin (101).

4. A method for making a panel according to claim 1, comprising the steps of:
a. making (510) a blank (512) patch by laying up and consolidating a stack of plies impregnated with thermoplastic polymer;
b. trimming (520) said consolidated blank (512) so as to make the contour and a gradient greater than 0.5 on the edges of the patch (522);
c. making (530) a skin (531) by laying up fibrous plies prepregged with thermoplastic polymer;
d. placing the patch (522) in contact with the skin (531) at the required location
e. heating the assembly made up of the patch (522) and the skin (531) to a temperature at least equal to the melting temperature of the thermoplastic polymer making up the matrix of the patch or the matrix of the skin so as to fix the patch to the skin;
f. jointly consolidating (540) the patch and skin assembly.

5. A method according to claim 4, **characterized in that** it comprises, after step (d), a step of:
g. applying a vacuum to the patch and skin assembly

6. A method according to claim 5, **characterized in that** it comprises, between steps (c) and (d), a step of:
h consolidating the skin.

7. A method according to claim 6, **characterized in that** it comprises, between steps (e) and (f), a step of:
i. jointly conforming the shapes of the patch and skin.

8. A method for making a panel according to claim 3, **characterized in that** it comprises the steps of:
a. making a first consolidated blank by integrating the patches on a first side of the skin using a method according to claim 4;
b. integrating (560) the patches on the side opposite the first side of the skin of the first blank using a method according to claim 7.
